# EUROPEAN PATENT SPECIFICATION

(11) **EP 0 646 887 B1**
(45) Date of publication and mention of the grant of the patent: **27.10.1999**
(21) Application number: 94114026.1
(22) Date of filing: 07.09.1994
(51) Int. Cl.: G06K 9/20

(54) **Method and system for managing character recognition of a plurality of document form images having common data types**
Verfahren und Anlage zur Verwaltung der Zeichenerkennung einer Vielheit von Formularbildern mit gemeinsamen Datentypen
Méthode et système pour gérer la réconnaissance des caractères d'une pluralité d'images de formulaires ayant des types de données communs

(30) Priority: 04.10.1993 US 130953
(43) Date of publication of application: 05.04.1995
(73) Proprietor: International Business Machines Corporation, Armonk, N.Y. 10504 (US)
(72) Inventor: Billings, Douglas W., Gaithersburg, MD 20879 (US)
(74) Representative: Pratt, Richard Wilson

(56) References cited:
- US-A- 4 300 123
- IEEE COMPUTER SOC. OFFICE AUTOMATION SYMP., 27 April 1987 GAITHERSBURG, MD, USA, pages 180-9, D. WOELK ET AL. 'Multimedia applications and database requirements'

## Description

### Background of the Invention

### 1. Technical Field

The invention disclosed broadly relates to data processing and more parti cularly relates to character recognition of document forms.

### 2. Background Art

This patent application is related to the European patent application EP-A-0 565 911 claiming the priority of April 15, 1992 and being entitled "Data Processing System and Method for Sequentially Repairing Character Recognition Errors for Scanned Images of Document Forms," by T. S. Betts, et al., the application being assigned to the IBM Corporation.

This patent application is also related to the European patent application EP-A-0 565 912 claiming the priority of April 17, 1992 and being entitled "Data Processing System and Method for Selecting Customized Character Recognition Processes and Coded Data Repair Processes for Scanned Images of Document Forms," by T. S. Betts, et al., the application being assigned to the IBM Corporation.

This patent application is also related to U. S. patent 5,140,650, entitled "A Computer Implemented Method for Automatic Extraction of Data From Printed Forms," by R. G. Casey, et al., the patent being assigned to the IBM Corporation.

This patent application is also related to the European patent application EP-A-0 622 751 claiming the priority date of April 26, 1993, entitled "System and Method for Enhanced Character Recognition Accuracy by Adaptive Probability Weighting," by M. P. T. Bradley, the application being assigned to the IBM Corporation.

This patent application is also related to the European patent application (EP-A-0 637 811) by D. W. Billings, et al. entitled "Method for Defining a Plurality of Form Definition Data Sets," claiming the priority date of August 2, 1993, the application being assigned to the IBM Corporation.

### 3. Background Art

Data contained in digitized images can be extracted for a number of purpo ses, and in many different ways. A prerequisite for extracting information from a form is a knowledge of the types and locations of the data (information about the "fields" of the form). Currently, most forms processing applications have their own method for "defining" forms, and each method is incompatible with the others. In large image systems which use several different forms processing applications, each form needs to be separately defined for each application, which costs time and introduces inconsistencies in the form definitions. The method disclosed in the D. W. Billings, et al. patent application creates form definition data sets which can be used for almost any forms processing application.

In many business applications, there are two or more form types having the same data types, but whose field layouts are different. An example is having different editions of the same basic form. In existing character recognition systems, two different form definition data sets must be used for the two respective form types throughout the processing cycle. After forms recognition, a customized form definition data set must be used for character recognition. If there are several types of character recognition engines, then each will require a separate form definition data set, including customized sets of field coordinates. In many systems, to conserve storage space, the form's image is compressed and then buffered until the character recognition processor is available. The compressed form must then be completely decompressed before the field images can be input to the character recognition operation. Decompression of the entire document form takes significant time, and slows the overall throughput for the system.

### Objects of the Invention

It is therefore an object of the invention to reduce the number of form definition data sets required for a character recognition processor to process a plurality of form types having a plurality of common data types.

It is another object of the invention, to increase the speed of field location for a character recognition processor to process a plurality of form types having a plurality of common data types.

It is therefore an object of the invention to reduce the number of form definition data sets required for a plurality of character recognition processors to process a plurality of form types having a plurality of common data types.

### Summary of the Invention

These and other objects, features and advantages are accomplished by the invention disclosed herein. The method and system of the invention are based on the transformation of a family of form types having a common set of data types, into a meta-form which contains all of the data types but which are arranged into a single layout. The location of the fields on the meta-form are specified by a meta-form definition data set.

Further in accordance with the invention, the single meta-form definition data set is substituted in the character recognition processor, for the plurality of form definition dat a sets which specify the layouts of the original form types in the family. This speeds the character recognition operation by not requiring a time consuming search for a customized form definition.

If several types of character recognition processors are to be applied to the same family of forms, then a single meta-form definition data set can be employed. A single field location data set can be employed to specify the common layout for the family.

By transforming the layout of field images for each form type in a family, into a single layout in the meta-form, other advantages can accrue from the invention. The fields of the meta-form can be quickly located to speed the decompression of meaningful parts of a compressed document form image, without requiring the time consuming decompression of other parts which are not of interest. The meta-form definition data set can provide this location information to the decompression process.

The resulting method and system provide a faster overall character recognition processing of families of document forms.

### Description of the Figures

These and other objects, features and advantages will be more fully appreciated with reference to the accompanying figures.
- Fig. 1: is a data flow diagram illustrating the transformation of form images into a single meta-form image.
- Fig. 2: illustrates an example layout for the form A3, and its corresponding run length encoding.
- Fig. 3A: illustrates an example meta-form image A for the transformation of the form A3 of Fig. 2, into the meta-form image 120.
- Fig. 3B: illustrates the run length encoded ID field for the meta-form image of Fig. 3A.
- Fig. 3C: illustrates the run length encoded field X for the meta-form image A of Fig. 3A.
- Fig. 3D: illustrates the run length encoded fields Y and Z for the meta-form image A of Fig.3A.
- Fig. 4: illustrates an example form definition data set for the form A3 of Fig. 2.
- Fig. 5A: illustrates the form definition data set for form Al.
- Fig. 5B: illustrates the form definition data set for form A2.
- Fig. 5C: illustrates the form definition data set for form A3.
- Fig. 6: illustrates the form definition data set for the meta-form image A
- Fig. 7A: is a flow diagram of a sequence of operational steps for the transformation of a form image into a meta-form image.
- Fig. 7B: is a flow diagram of a sequence of operational steps for character recognition management of a meta-form image.
- Fig. 8: is a functional block diagram of a system for the transformation of a form image into a meta-form image and the management of the character recognition of the meta-form image.

### Discussion of the Preferred Embodiment

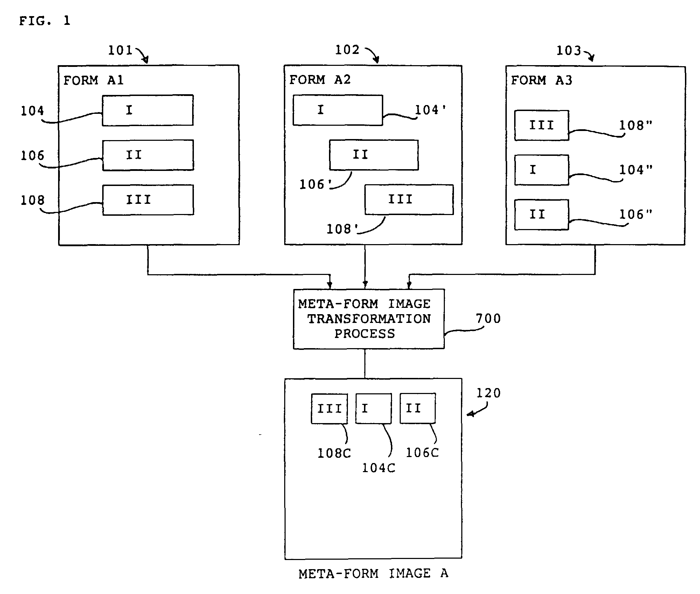

The method and system of the invention are based on the transformation of a plurality of form types having a common set of data types, into a meta-form which contains all of the data types which are arranged into a single layout. The location of the fields on the meta-form are specified by a meta-form definition data set. In Fig. 1, three forms 101, 102 and 103 make up a family of forms having a common set of data types I, II and III. The first form type 101 has three fields 104, 106 and 108 containing the data types I, II and III. The second form type 102 has the three fields 104', 106' and 108' containing the three corresponding data types I, II and III. The third form type 103 has the three fields 104'', 106'' and 108'' which contain the corresponding three data types I, II and III. The form ID for form 101 is "A1," the form ID for the form 102 is "A2," and the form ID for the form 103 is "A3."

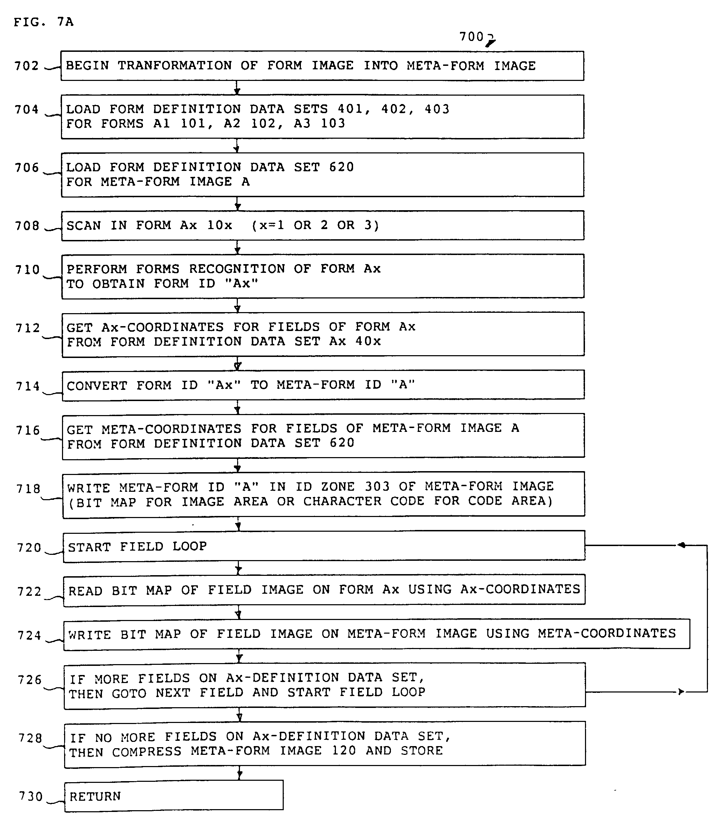

In accordance with the invention, the meta-form image transformation process 700, whose flow diagram is shown in Fig. 7A, operates upon either form 101, 102 or 103, to trans form it into the meta-form image A 120 shown in Fig. 1. It is seen that the layout of the fields for the data types I, II and III for the forms 101, 102 and 103 are different from one another, and are also different from the layout of the meta-form image A, where fields 104C, 106C and 108C, respectively contain data types I, II and III.

The layout of the fields for the family of forms 101, 102 and 103 is specified in a forms definition utility, such as that described in the above referenced Billings, et al. patent application. Similarly, the layout of the meta-form image A120 can also be specified by the forms definition utility described in the above referenced Billings, et al. patent application. The location of the fields 104C, 106C and 108C in the meta-form image A120 of Fig. 1, is specified by the user so as to take advantage of a common layout to speed the overall character recognition processing of document forms which are members of the same family.

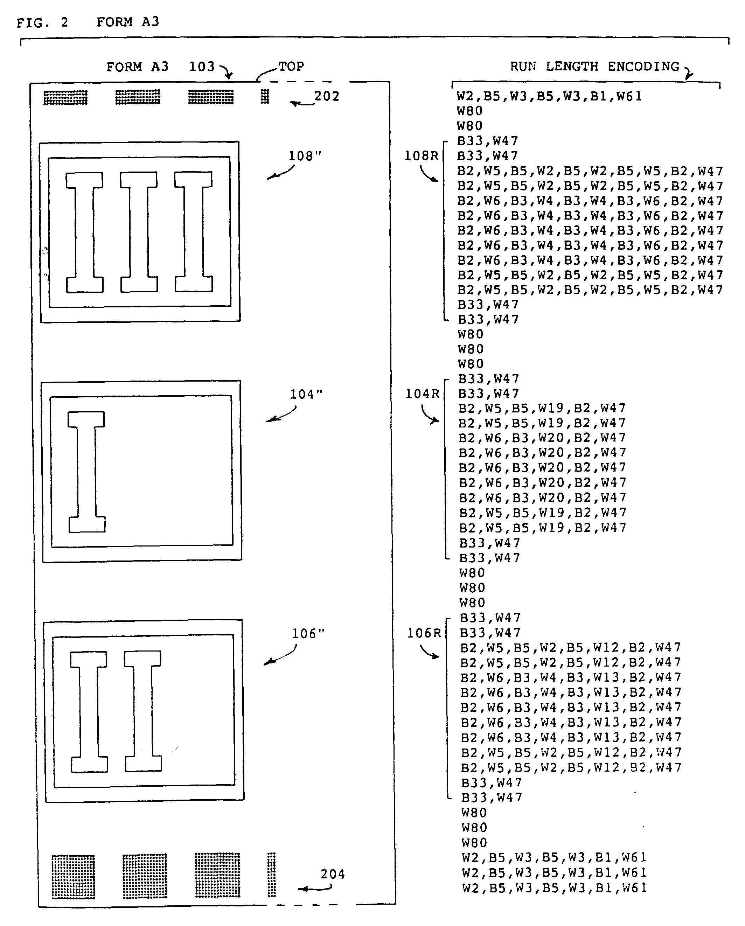

Fig. 2 illustrates an example of form 103, wherein the fields 108'', 104'' and 106'' are shown with their corresponding run length encoding compression fields of 108R, 104R and 106R, respectively. It is seen that near the top of the form 103, a line of characters 202 exists and also near the bottom of the form another several lines of characters 204 exist.

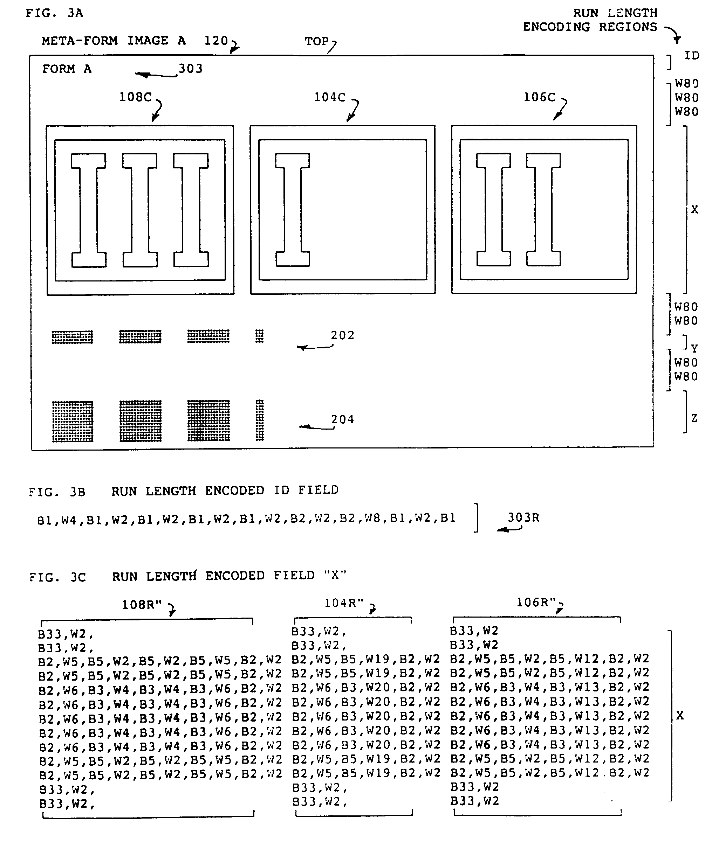

Reference is now made to Fig. 3A which shows the layout of the meta-form image A120 corresponding to the original form 103 of Fig. 2. After transformation by the meta-form image transformation process 700, the meta-form image A of Fig. 3A has a horizontal arrangement of the three respective fields 108C, 104C and 106C, for the original fields 108'', 104'' and 106''. The user has selected the arrangement shown in Fig. 3A, as a common layout for the corresponding three fields of the family of forms 101, 102 and 103 of Fig. 1. It is also seen in Fig. 3A, that the line of characters 202 and 204 occupy regions below the fields 108C, 104C and 106C in Fig. 3A.

Comparison should be made in the arrangement of the run length encoded fields for the corresponding portions of the form 103 of Fig. 2 and the meta-form A of Fig. 3A. In Fig. 2 it is seen that the corresponding lines of black and white pixels in the form 103 of Fig. 2, is arranged in a vertical manner. Compression proceeds from top to bottom for the form 103. Decompression would also proceed from the top to the bottom, requiring the decompression operation to proceed through most of the lines of the form 103 before getting to the bottom portion of the lowest field of interest, 106''. This would require a substantial amount of time for decompression. Reference should now be made to the meta-form image A of Fig. 3A, which has a horizontal layout for the corresponding three fields 108C, 104C and 106C. Reference can now be made to Fig. 3C which shows a run length encoded field X for the three fields 108C, 104C and 106C of Fig. 3A. The run length encoded field X of Fig. 3C is arranged to have fewer lines in the vertical direction than does the run length representation of the corresponding three fields shown as 108R, 104R and 106R in Fig. 2. Thus, both compression and decompression, which goes from the top of the document image to the bottom, will be accomplished more rapidly for the meta-form image A of Fig. 3A than will be for the form 103 of Fig. 2.

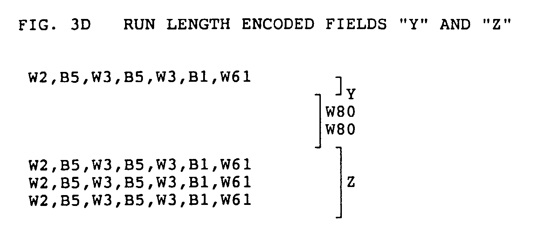

Reference can also be made to the identification field 303 of the meta-form image A of Fig. 3A. The identification field is "form A" 303 for the meta-form image 120. This information can be incorporated as either character code which can be included with the compressed image of Fig. 3C, or as a bit mapped image which can then be compressed by run length encoding as shown in Fig. 3B. Alternately, the form identification 303 can be used as a part of the file handle or file name for the file of compressed image data for the compressed meta-form image of Fig. 3A. Fig. 3D shows the run length encoded fields Y and Z corresponding to the lines 202 and 204 in the meta-form image A of Fig. 3A.

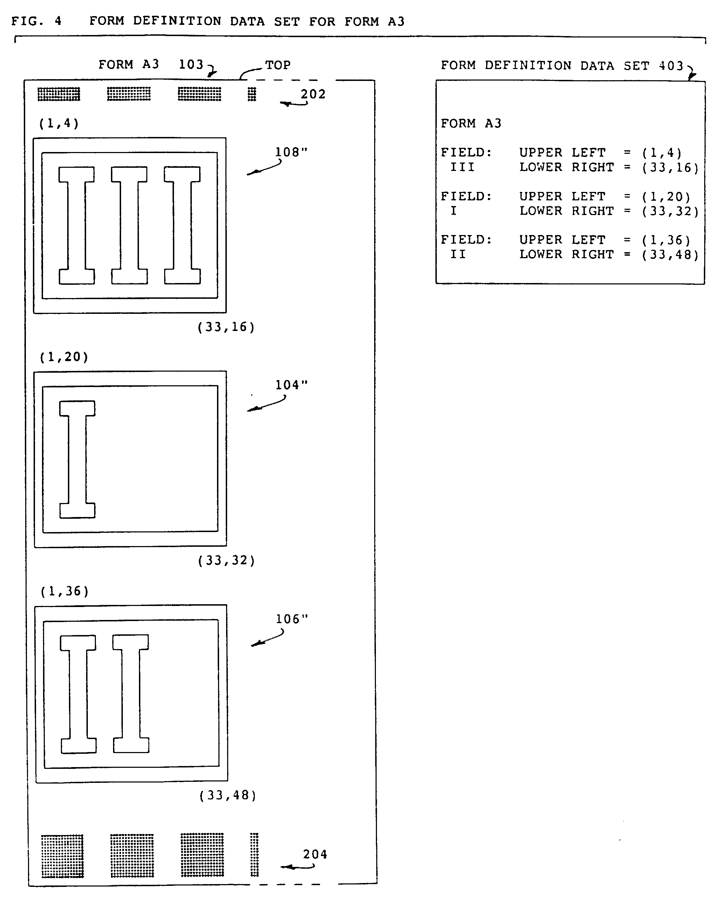

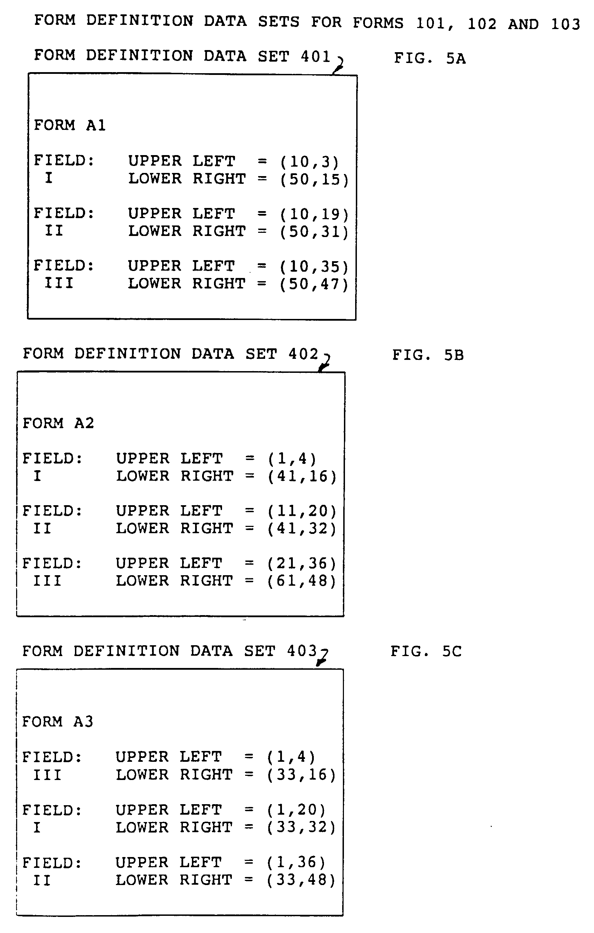

Reference to Fig. 4 will continue this example, showing the form definition data set of 403 for the form 103. Fig. 4 illustrates how the coordinates for the respective fields 108'', 104'' and 106''can be used as the coordinate information to be included in the form definition data set 403. The field III is field 108'', the field I is the field 104'', and the field II is the field 106'' in Fig. 4. Reference can now be made to Fig. 5 which shows the form definition data sets for all three forms 101, 102 and 103 in the family of forms of Fig. 1. There it is seen that in Fig. 5A the form definition data set 401 is given for the form 101, in Fig. 5B the form definition data set 402 is given for the form 102, and in Fig. 5C, the form definition data set 403 is given for the form 103.

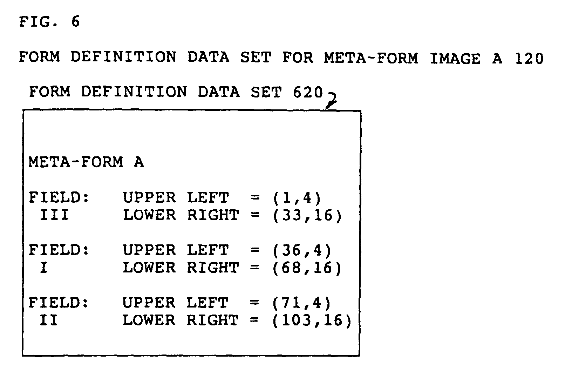

Reference can now be made to Fig. 6 which shows the form definition data set for the meta-form image A120. The form definition data set 620 provides the coordinates for the meta-form 120, giving the field III for the coordinates of field 108C, field I for the coordinates of field 104C, and field II as the coordinates for the field 106C of Fig. 3A.

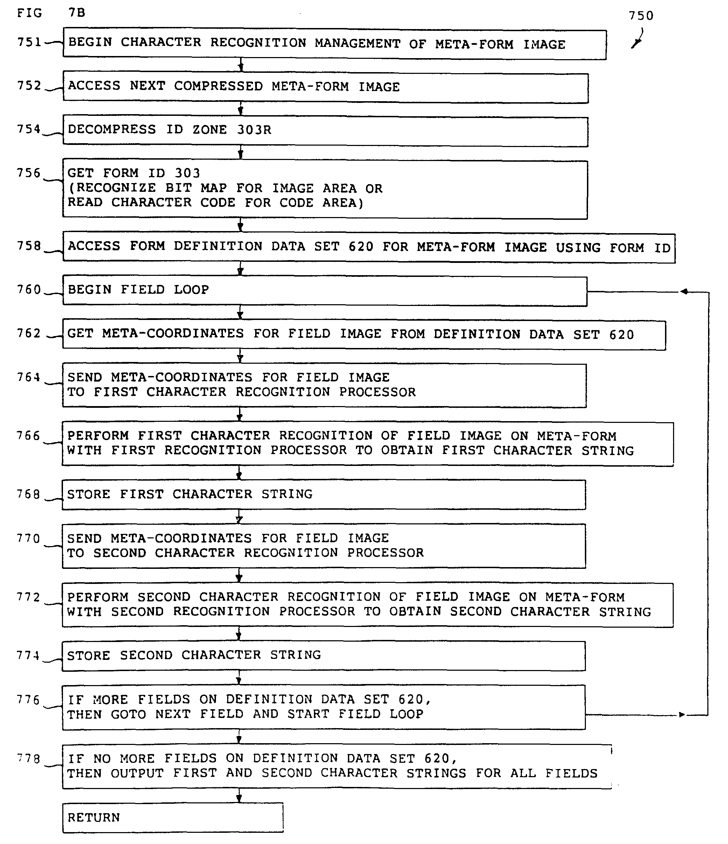

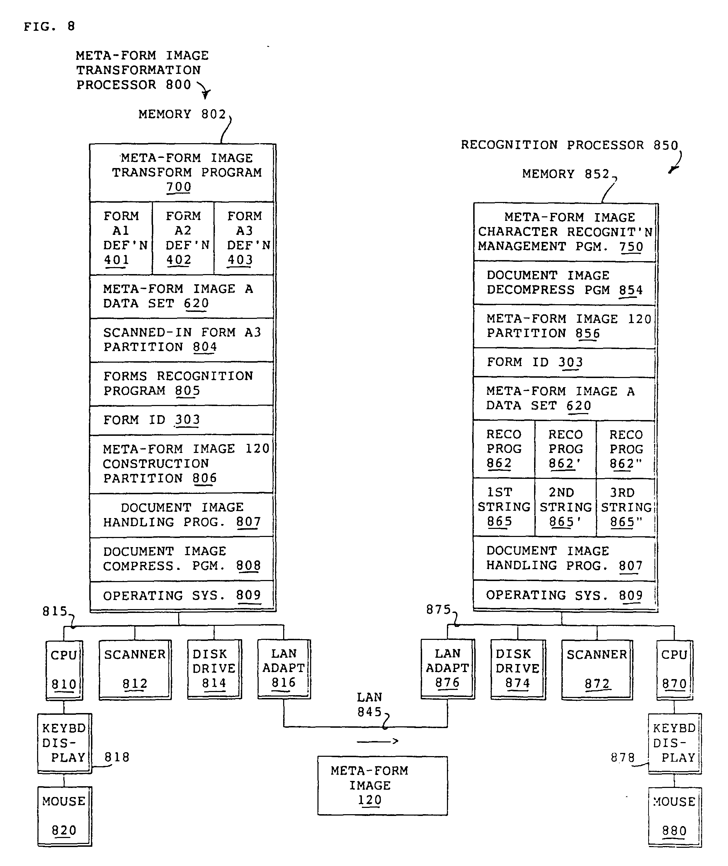

Reference can now be made to the flow diagram of Fig. 7A which presents the method 700 for the transformation of a form image into a meta-form image. The flow diagram of Fig. 7A can be embodied as a sequence of executable instructions which are executed in a CPU such as the CPU 810 of Fig. 8, to carry out the method of the invention shown in Fig. 7A. The flow diagram of Fig. 7A begins with step 702 and proceeds to step 704 which loads the form definition data sets 401, 402 and 403 for the forms A1 101, A2 102 and A3 103. Then step 706 loads the form defin ition data set 620 for the meta-form image A 120.

Then step 708 scans in a form such as form 101, form 102 or form 103. Then step 710 performs a form recognition operation on the form, for example on form 101 or 102 or 103, to obtain the form ID A1, A2 or A3, respectively. In this discussion of the flow diagram, the form ID A3 will be used.

Then step 712 gets the A3 coordinates for the fields of the form A3 103, from the form definition data set 403. Then step 714 converts the form ID A3 to the meta-form ID A. Then step 716 gets the meta coordinates for the fields of the meta-form image A from the form definition data set 620. Then step 718 writes the meta-form ID "A" in the ID zone 303 of the meta-form image. As was discussed before, this can be a bit map of the character "A" placed in the image area of the meta-form being constructed. Alternately, this can be a character code ASCII value "A," which can either be included in the image area or associated in a file handle for the file of the compressed image.

Step 720 of Fig. 7A then starts the field loop which proceeds to step 722 which reads the bit map of the field image on the form A3 using the A3 coordinates. Then step 724 writes the bit map of the field image onto the meta-form image using the meta coordinates. Then step 726 determines if there are more fields in the A3 definition data set, and if there are, then the flow proceeds to step 720 to process another field on the form of 103. Step 728 determines that there are no more fields on the A3 definition data set and then proceeds to compress the meta-form image 120, using for example a run length encoding operation such as has been referred to above, and then the compressed image file is stored for later character recognition operations. Step 730 then returns to the main program.

Reference can be made here to Fig. 8 which illustrates the functional block diagram of the system which includes the meta-form image transformation processor 800 which executes the program 700 of Fig. 7A, and the recognition processor 850 which executes the character recognition management program 750 of Fig. 7B.

With respect to the meta-form image transformation processor 800, Fig. 8 shows that it includes the memory 802 which is connected by the bus 815 to the CPU 810, the keyboard and display 818, and the mouse pointing device 820. The bus 815 also connects the memory 802 to the scanner 812, the disk drive 814, and the local area network adaptor 816. The local area network adaptor connects over the local area network 845 to the recognition processor 850.

The memory 802 of the meta-form image transformation processor 800, includes the meta-form image transform program 700 whose flow diagram was discussed with respect to Fig. 7A. Also included in memory 802 is the form definition 401, the form definition 402 and the form definition 403. Also included in the memory 802 is the meta-form image A definition data set 620. The memory 802 includes a partition 804 for storing the scanned-in form A3 or 103. The forms recognition program 805 performs a forms recognition operation on the scanned-in form 103, to obtain the form ID which is stored in 303. Memory 802 also includes the meta-form image 120 construction partition 806, in which the meta-form image is constructed in accordance with the operation of the program 700. Also included is a document image handling program 807, a document image compression program 808, and an operating system 809. All of the programs in the memory 802 are sequences of executable instructions which, when executed by the CPU 810, perform the intended operations.

Referring now to Fig. 7B, it depicts the flow diagram of the method 750 which manages character recognition for the meta-form image. The process is embodied as a sequence of executable instructions which are executed by the CPU 870 of the recognition processor 850 of Fig. 8.

The flow diagram of Fig. 7B begins with step 751 and flows to step 752 which accesses the next compressed meta-form image. This is the meta-form image 120 which is trans ferred over the LAN 845 in Fig. 8 to the LAN after 876 of the recognition processor 850. Then step 754 decompresses the identification zone 303R and step 756 gets the form identification 303. This is either the recognition of the bit map for the form identification in the image area or alternately it is a reading of an encoded character representation of the form ID in the compressed image file, or alternately it is a character code representation of the form ID contained in the file handle or file name for the file. The method of Fig. 7B then proceeds to step 758 which accesses the form definition data set 620 for the meta-form image using the form identification value.

Step 760 begins the field loop which proceeds to step 762 to get the meta coordinates for the field image from the definition data set 620. Then step 764 sends the meta coordinates for the field image to the first character recognition processor 862 in Fig. 8. Step 766 performs the first character recognition operation of the field image on the meta-form with the first recognition processor to obtain a first character string. Then step 768 stores the first character string in the partition 865 of Fig. 8.

In those applications where more than one character recognition processor is applied to processing a particular form, step 770 of Fig. 7B sends the meta coordinates for the field image to the second character recognition processor, such as processor 862' of Fig. 8. Then step 772 performs the second character recognition operation of the field image on the meta-form with the second recognition processor, to obtain a second character string. Then step 774 stores the second character string in the second partition 865' of Fig. 8.

Then step 776 determines if there any more fields on the definition data set 620, and if there are, then the flow proceeds to step 760 to process the next field. Step 778 determines that there are no more fields in the definition data set 620, and therefore the first and second character strings are output from the partitions 865 and 865', for all of the fields in the meta-form being processed. Then the process of Fig. 7B returns to the main program.

Fig. 8 can be returned to for a more detailed discussion of the recognition processor 820, which carries out the method of character recognition management of the meta-form image, shown in Fig. 7B. In Fig. 8, the recognition processor 850 includes the memory 852, which is connected by means of the bus 875 to the LAN adaptor 876, the disk drive 874, the scanner 872, the CPU 870, the keyboard and display 878 and the mouse pointing device 880. The memory 852 includes the meta-form image character recognition management program 750, which was described above in Fig. 7B. Also included in the memory 852 is the document image decompression program 854, and a meta-form image 120 partition 856. A partition is provided for the form ID 303 and another partition is provided for the meta-form image A data set 620. For those applications where several character recognition programs are to be applied to the same family of forms, several recognition programs can be stored in the memory 852. Fig. 8 shows the recognition program 862, 862' and 862'' stored therein. The outputs of the recognition programs 862, 862' and 862'' are the first string, second string and third string which are character strings buffered in the partitions 865, 865' and 865'', respectively. Also provided in the memory 852 is a partition for the document image handling program 807, and the operating system 809. All of the programs stored in the memory 852 are sequences of executable instructions, which when executed in the CPU 870, carry out the intended operations.

The resulting invention provides a single meta-form definition data set which can be substituted in the character recognition processor for the plurality of form definition data sets which specify the layouts of the original form types in the family. This speeds the character recognition operation by not requiring a time consuming search for a customized form definition. In addition, the invention provides that if several types of character recognition processors are to be applied to the same family of forms, then a single meta-form definition data set can be employed. A single field location data set can be employed to specify the common layout for the family. Furthermore, by transforming the layout of field images for each form type in a family, into a single layout in a meta-form, other advantages can accrue from the invention. The fields of the meta-form can be quickly located to speed the decompression of meaningful parts of the compressed document form image, without requiring the time consuming decompression of other parts which are not of interest. The meta-form definition data set can be provide this location information to the decompression process. Thus, the resulting method and system provide a faster overall character recognition processing for families of document forms.

Additional advantages of the invention include the elimination or minimization of the switching time to switch between different form definitions. Another advantage of the invention is that it allows mapping field locations to different positions on the form in whatever manner is most advantageous. For example some character recognition machines operate faster when all of the fields are aligned horizontally and this can be accommodated by the invention. Another advantage of the invention is that it minimizes the need for multiple data types on the same form. There are some character recognition machines which cannot load more than a given number of data types at one time. The invention allows separate meta-forms to be created, each of which has only the number of data types which can be handled by a particular type of character recognition machine.

Although a specific embodiment of the invention has been disclosed, it will be understood by those having skill in the art, that changes can be made to that specific embodiment without departing from the scope of the invention as defined by the claims.

## Claims

1. A method for managing the recognition of text characters in a plurality of document form types having a plurality of common data types, said method being executed in a data processing system, including a document image input and a character recognition processing means, and comprising the steps of:
storing a first form definition for a first form type (101), specifying a first plurality of data type fields (104, 106, 108), including a first field for a first data type and a second field for a second data type;
storing a second form definition for a second form type (102), specifying a second plurality of data type fields (104', 106', 108'), including a third field for said first data type and a fourth field for said second data type;
storing a meta-form definition for a meta-form type (120) including a fifth field for said first data type and a sixth field for said second data type;
receiving an image of an input document form of said first form type, including a first image of said first field containing first input data of said first data type and a second image of said second field containing second input data of said second data type;
reading said first image of said first field using said first form definition and forming a meta-form image of said input document by writing said first image into said fifth field using said meta-form definition;
reading said second image of said second field using said first form definition and further forming said meta-form image of said input document by writing said second image into said sixth field using said meta-form definition;
transferring said meta-form image of said input document to said character recognition processing means;
character recognizing said first input data in said fifth field of said meta-form image using said meta-form definition and character recognizing said second input data in said sixth field of said meta form image usind said meta-form definition in said character recognition means;
outputting said first and second input data from said character recognition means.

2. The method of claim 1, which further comprises:
receiving an image of a second input document form of said second form type in said system, including a third image of said third fields containing third input data of said first data type and a fourth image of said fourth fields containing fourth input data of said second data type;
reading said third image of said third fields using said second form definition and forming a second meta-form image of said second input document by writing said third image into said fifth fields using said meta-form definition;
reading said fourth image of said fourth field using said second form definition and further forming said second meta-form image of said second input document by writing said fourth image into said sixth fields using said meta-form definition;
transferring said second meta-form image of said second input document to said character recognition processing means;
character recognizing said third input data in said fifth fields of said second meta-form image using said meta-form definition and character recognizing said fourth input data in said sixth fields of said second meta-form image using said meta-form definition in said character recognition means; and
outputting said third and fourth input data from said character recognition means.

3. The method of claim 1, which further comprises:
following said step of receiving an image of an input document form, the step of performing forms recognition thereon to determine that it is of said first form type having a first form identification;
accessing said first form definition in said system for said first form type, using said first form identification;
accessing said meta-form definition in said system for said meta-form type, using said first form identification;

4. The method of claim 3, which further comprises:
said step of forming a meta-form image of said input document, further comprising the step of including first information indicating said first form identification.

5. The method of claim 4, which further comprises:
before said step of character recognizing, the step of accessing said meta-form definition in said system for said meta-form type, using said first information.

6. The method of claim 5, which further comprises:
before said step of transferring said meta-form image of said input document to said character recognition processing means, the step of compressing said meta-form image.

7. The method of claim 6, which further comprises:
before said step of character recognizing, the step of decompressing said fifth fields of said meta-form image using said meta-form definition and said sixth fields of said meta-form image using said meta-form definition and omitting decompressing other portions of said meta-form image.

8. The method of claim 1, which further comprises:
said system including a second character recognition processing means;
transferring said meta-form image of said input document to said second character recognition processing means;
character recognizing said first input data in said fifth fields of said meta-form image using said meta-form definition and character recognizing said second input data in said sixth fields of said meta-form image using said meta-form definition in said second character recognition means; and
outputting said first and second input data from said second character recognition means.

9. The method of claim 1, which further comprises:
switching between said first form definition and said second form definition while continuing to use said meta-form definition in said system;
whereby the time required for said switching is minimized.

10. The method of claim 1, which further comprises:
mapping said fifth fields for said first data type and said sixth fields for said second data type in positions selected to maximize character recognition speeds for character recognition devices processing images of input documents, using said meta-form definition;
whereby field locations can be mapped to different positions on the form, in whatever manner is most advantageous for subsequent character recognition operations.

11. The method of claim 1, which further comprises:
forming a first meta-form definition in said system having a first plurality of N different data types and forming a second meta-form definition in said system having a second plurality of M data types, where M and N are quantities less than or equal to P;
said quantity P being the maximum number of different data types that can be processed by a character recognition device using either said first meta-form or said second meta-form definitions;
whereby the number of data types is minimized for the same meta-form, to accommodate character recognition devices capable of handling only a limited number of different types at one time.

12. A data processing system, including a document image input and a character recognition processing means (850), for managing the recognition of text characters in a plurality of document form types having a plurality of common data types, comprising:
first storage means (401, 402,403) for storing a first form definition in said system for a first form type, specifying a first plurality of data type fields including a first field for a first data type and a second field for a second data type;
said first storage means (401, 402, 403) storing a second form definition in said system for a second form type, specifying a second plurality of data type fields including a third field for said first data type and a fourth field for said second data type;
second storage means (620) for storing a meta-form definition in said system for a meta-form type, specifying a fifth field for said first data type and a sixth field for said second data type;
means for receiving an image of an input document form of said first form type in said system, including a first image of said first field containing first input data of said first data type and a second image of said second field containing second input data of said second data type;
reading means coupled to said first and second storage means, for reading said first image of said first field using said first form definition and forming a meta-form image of said input document by writing said first image into said fifth field using said meta-form definition;
said reading means reading said second image of said second field using said first form definition and further forming said meta-form image of said input document by writing said second image into said sixth field using said meta-form definition;
means coupled to said reading means and said character recognition means, for transferring said meta-form image of said input document to said character recognition processing means;
said character recognition processing means character recognizing said first input data in said fifth field of said meta-form image using said meta-form definition and character recognizing said second input data in said sixth field of said meta-form image using said meta-form definition; and
said character recognition means outputting said first and second input data.

## Patentansprüche

1. Verfahren für die Durchführung der Erkennung von Textzeichen in einer Vielzahl von Formulartypen mit einer Vielzahl von gemeinsamen Datentypen, wobei das Verfahren in einem Datenverarbeitungssystem ausgeführt wird, das einen Eingang für Dokumentbilder und eine Texterkennungseinrichtung beinhaltet, und die Schritte aufweist:
Speichern einer ersten Formulardefinition für einen ersten Formulartyp (101), der eine erste Mehrzahl von Datentypenfeldern (104, 106, 108) aufführt, mit einem ersten Feld für einen ersten Datentyp und einem zweiten Feld für einen zweiten Datentyp,
Speichern einer zweiten Formulardefinition für einen zweiten Formulartyp (102), das eine zweite Mehrzahl von Datentypenfeldern (104', 106', 108') aufführt, mit einem dritten Feld für den ersten Datentyp und einem vierten Feld für den zweiten Datentyp,
Speichern einer Zwischenformulardefinition für einen Zwischen- bzw. Metaformulartyp (120) mit einem fünften Feld für den ersten Datentyp und einem sechsten Feld für den zweiten Datentyp,
Empfangen eines Abbildes eines Eingangsformulars des ersten Formulartyps, das ein erstes Bild des ersten Feldes mit ersten Eingangsdaten des ersten Datentyps und ein zweites Bild des zweiten Feldes mit zweiten Eingangsdaten des zweiten Datentypes beinhaltet,
Einlesen des ersten Abbildes des ersten Feldes unter Verwendung der ersten Formulardefinition und Bilden eines Metaformularbildes des Eingangsdokuments durch Schreiben des ersten Bildes unter Verwendung der Metaformulardefinition in das fünfte Feld,
Einlesen des zweiten Abbildes des zweiten Feldes unter Verwendung der ersten Formulardefinition und Weiterbilden des Metaformularbildes des Eingangsdokuments durch Schreiben des zweiten Bildes unter Verwendung der Metaformulardefinition in das sechste Feld,
Übertragung des Metaformularbildes des Eingangsdokumentes zu der Texterkennungseinrichtung,
Erkennung der Zeichen der ersten Eingangsdaten in dem fünften Feld des Metaformularbildes unter Verwendung der Metaformulardefinition und Erkennung der Zeichen der zweiten Eingangsdaten in dem sechsten Feld des Metaformularbildes unter Verwendung der Metaformulardefinition in der Zeichenerkennungsvorrichtung,
Ausgabe der ersten und zweiten Eingangsdaten von der Zeichenerkennungseinrichtung.

2. Verfahren nach Anspruch 1, das weiterhin aufweist:
Empfangen eines Abbildes eines zweiten Eingangsformulars des zweiten Formulartyps in dem System, das ein drittes Abbild der dritten Felder, welches dritte Eingangsdaten des ersten Datentyps enthält, und ein viertes Abbild der vierten Felder, welches vierte Eingangsdaten des zweiten Datentyps enthält, beinhaltet,
Einlesen des dritten Abbildes der dritten Felder unter Verwendung der zweiten Formulardefinition und Bilden eines zweiten Metaformularbildes des zweiten Eingangsdokuments durch Schreiben des dritten Abbildes in die fünften Felder unter Verwendung der Metaformulardefinition,
Einlesen des vierten Abbildes des vierten Feldes unter Verwendung der zweiten Formulardefinition und Weiterbilden des zweiten Metaformularbildes des zweiten Eingangsdokuments durch Schreiben des vierten Bildes in die sechsten Felder unter Verwendung der Metaformulardefinition,
Übertragung des zweiten Metaformularbildes des zweiten Eingangsdokuments zu der Zeichenerkennungseinrichtung,
Erkennung der Zeichen der dritten Eingangsdaten in den fünften Feldern des zweiten Metaformularabbilds unter Verwendung der Metaformulardefinition und Erkennung der Zeichen der vierten Eingangsdaten in den sechsten Feldern des zweiten Metaformularabbildes unter Verwendung der Metaformulardefinition in der Zeichenerkennungsvorrichtung und
Ausgeben der dritten und vierten Eingangsdaten von der Zeichenerkennungseinrichtung.

3. Verfahren nach Anspruch 1, das weiterhin aufweist:
der Schritt, daß im Anschluß auf den Schritt des Erhaltens eines Abbildes eines Eingangsformulars das Durchführen einer Formularerkennung desselben folgt, um mit einer ersten Formularidentifikation festzustellen, daß es vom ersten Formulartyp ist,
Zugreifen auf die erste Formulardefinition in dem System für den ersten Formulartyp unter Verwendung der ersten Formularidentifikation,
Zugreifen auf die Metaformulardefinition in dem System für den Metaformulartyp unter Verwendung der ersten Formularidentifikation.

4. Verfahren nach Anspruch 3, wobei
der Schritt des Bildens eines Metaformularbildes des Eingangsdokuments weiterhin aufweist: den Schritt des Aufnehmens einer ersten Information, welche die erste Formularidentifikation anzeigt.

5. Verfahren nach Anspruch 4, das weiterhin aufweist:
den Schritt des Zugreifens auf die Metaformulardefinition in dem System für den Metaformulartyp unter Verwendung der ersten Information, vor dem Schritt der Erkennung der Zeichen.

6. Verfahren nach Anspruch 5, das weiterhin aufweist:
den Schritt des Komprimierens des Metaformularbildes vor dem Schritt der Übertragung des Metaformularbildes des Eingangsdokuments zu der Zeichenerkennungseinrichtung.

7. Verfahren nach Anspruch 6, das weiterhin aufweist:
vor dem Schritt der Erkennung der Zeichen, den Schritt des Dekomprimierens der fünften Felder des Metaformularabbildes unter Verwendung der Metaformulardefinition und der sechsten Felder des Metaformularbildes unter Verwendung der Metaformulardefinition, wobei die Dekomprimierung anderer Abschnitte bzw. Teile des Metaformularbildes ausgelassen wird.

8. Verfahren nach Anspruch 1, das weiterhin aufweist:
das System beinhaltet eine zweite Zeichenerkennungseinrichtung,
Übertragung des Metaformularbildes des Eingangsdokuments zu der zweiten Zeichenerkennungseinrichtung,
Erkennung der Zeichen der ersten Eingangsdaten in den fünften Feldern des Metaformularbildes unter Verwendung der Metaformulardefinition und Erkennung der Zeichen der zweiten Eingangsdaten in den sechsten Feldern des Metaformularbildes unter Verwendung der Metaformulardefinition in der zweiten Zeichenerkennungseinrichtung und
Ausgeben der ersten und zweiten Eingangsdaten von der zweiten Zeichenerkennungseinrichtung.

9. Verfahren nach Anspruch 1, das weiterhin aufweist:
Wechseln zwischen der ersten Formulardefinition und der zweiten Formulardefinition während die Verwendung der Metaformulardefinition in dem System beibehalten wird,
wodurch die für das Wechseln benötigte Zeit minimiert wird.

10. Verfahren nach Anspruch 1, das weiterhin aufweist:
Abbilden der fünften Felder für den ersten Datentyp und der sechsten Felder für den zweiten Datentyp auf Positionen, die ausgewählt wurden, um die Geschwindigkeiten der Zeichenerkennung der Zeichenerkennungseinrichtungen, die Bilder der Eingangsdokumente verarbeiten, unter Verwendung der Metaformulardefinition zu maximieren,
wobei Feldpositionen auf verschiedene Positionen des Formulars abgebildet werden können, welche Art und Weise auch immer am vorteilhaftesten für die nachfolgende Zeichenerkennungsfunktion ist.

11. Verfahren nach Anspruch 1, das weiterhin aufweist:
Bilden einer ersten Metaformulardefinition in dem System mit einer ersten Mehrzahl von N unterschiedlichen Datentypen und Bilden einer zweiten Metaformulardefinition in dem System mit einer zweiten Mehrzahl von M Datentypen, wobei M und N Zahlen sind, die kleiner oder gleich als P sind,
die Größe P, die maximale Anzahl von verschiedenen Datentypen ist, die von einer Zeichenerkennungseinrichtung verarbeitet werden kann, die entweder die erste Metaformular- oder die zweite Metaformulardefinition benutzt,
wobei die Anzahl der Datentypen innerhalb eines Metaformulars minimiert ist, um die Zeichenerkennungseinrichtung in die Lage zu versetzen, nur eine begrenzte Anzahl von verschiedenen Typen zur gleichen Zeit zu handhaben.

12. Datenverarbeitungssystem, das einen Eingang für ein Dokumentenbild und eine Texterkennungsvorrichtung (850) beinhaltet, für die Durchführung der Erkennung von Textbuchstaben in einer Vielzahl von Dokumentformulartypen mit einer Mehrzahl von gemeinsamen Datentypen, und welches aufweist:
erste Speichereinrichtungen (401, 402, 403) zum Speichern bzw. Ablegen einer ersten Formulardefinition in dem System für einen ersten Formulartyp, die eine erste Mehrzahl von Datentypenfeldern aufführt bzw. spezifiziert, das ein erstes Feld für einen ersten Datentyp und ein zweites Feld für einen zweiten Datentyp beinhaltet,
wobei die ersten Speichereinrichtungen (401, 402, 403) eine zweite Formulardefinition in dem System für einen zweiten Formulartyp speichern, die eine zweite Mehrzahl von Datentypenfeldern aufführt bzw. spezifiziert, einschließlich eines dritten Feldes für den ersten Datentyp und eines vierten Feldes für den zweiten Datentyp,
zweite Speichereinrichtungen (620) zum Speichern einer Metaformulardefinition in dem System für einen Metaformulartyp, der ein fünftes Feld für den ersten Datentyp und ein sechstes Feld für den zweiten Datentyp aufführt bzw. spezifiziert,
eine Einrichtung für den Empfang eines Bildes eines Eingangsdokumentformulars des ersten Formulartyps in dem System, der ein erstes Bild des ersten Feldes mit den ersten Eingangsdaten des ersten Datentyps und ein zweites Bild des zweiten Feldes mit den zweiten Eingangsdaten des zweiten Datentyps enthält,
eine Ausleseeinrichtung, die mit den ersten und zweiten Speichereinrichtungen verbunden ist, um das erste Bild des ersten Feldes unter Verwendung der ersten Formulardefinition auszulesen und um ein Metaformularbild des Eingangsdokuments durch Schreiben des ersten Bildes in das fünfte Feld unter Verwendung der Metaformulardefinition zu bilden,
wobei die Ausleseeinrichtung das zweite Bild des zweiten Felds unter Verwendung der ersten Formulardefinition ausliest und weiterhin das Metaformularbild des Eingangsdokuments durch Schreiben des zweiten Bildes in das sechste Feld unter Verwendung der Metaformulardefinition bildet,
eine Einrichtung, die mit der Ausleseeinrichtung und der Texterkennungseinrichtung verbunden ist für die Übertragung des Metaformularbildes des Eingangsdokuments zu der Texterkennungseinrichtung,
wobei die Texterkennungseinrichtung die Zeichen der ersten Eingangsdaten in dem fünften Feld des Metaformularbildes unter Verwendung der Metaformulardefinition erkennt und die Zeichen der zweiten Eingangsdaten in dem sechsten Feld des Metaformularbildes unter Verwendung der Metaformulardefinition erkennt, und
die Texterkennungsvorrichtung die ersten und zweiten Eingangsdaten ausgibt.

## Revendications

1. Procédé de gestion de reconnaissance de caractères de texte dans une pluralité de types de formulaires formant documents ayant une pluralité de types de données communs, ledit procédé étant exécuté dans un système de traitement de données, comprenant une entrée d'image formant document et des moyens de traitement de reconnaissance de caractères, et comprenant les étapes suivantes :
le stockage d'une première définition de formulaire pour un premier type de formulaire (101), en spécifiant une première pluralité de champs du type données (104, 106, 108), comprenant un premier champ pour un premier type de données et un deuxième champ pour un second type de données ;
le stockage d'une seconde définition de formulaire pour un second type de formulaire (102), en spécifiant une seconde pluralité de champs du type données (104', 106', 108'), comprenant un troisième champ pour ledit premier type de données et un quatrième champ pour ledit second type de données ;
le stockage d'une définition de méta-formulaire pour un type de méta-formulaire (120), comprenant un cinquième champ pour ledit premier type de données et un sixième champ pour ledit second type de données ;
la réception d'une image d'un formulaire formant document d'entrée dudit premier type de formulaire, comprenant une première image dudit premier champ contenant des premières données d'entrée dudit premier type de données et une deuxième image dudit deuxième champ contenant des deuxièmes données d'entrée dudit second type de données ;
la lecture de ladite première image dudit premier champ en utilisant ladite première définition de formulaire et la formation d'une image de méta-formulaire dudit document d'entrée en écrivant ladite première image dans ledit cinquième champ en utilisant ladite définition de méta-formulaire ;
la lecture de ladite deuxième image dudit deuxième champ en utilisant ladite première définition de formulaire et la formation supplémentaire de ladite image de méta-formulaire dudit document d'entrée en écrivant ladite deuxième image dans ledit sixième champ en utilisant ladite définition de méta-formulaire ;
le transfert de ladite image de méta-formulaire dudit document d'entrée vers lesdits moyens de traitement de reconnaissance de caractères ;
la reconnaissance des caractères desdites premières données d'entrée dans ledit cinquième champ de ladite image de méta-formulaire en utilisant ladite définition de méta-formulaire et la reconnaissance des caractères desdites deuxièmes données d'entrée dans ledit sixième champ de ladite image de méta-formulaire en utilisant ladite définition de méta-formulaire dans lesdits moyens de reconnaissance de caractères ;
la sortie desdites premières et deuxièmes données d'entrée en provenance desdits moyens de reconnaissance de caractères.

2. Procédé selon la revendication 1, qui comprend de plus :
la réception d'une image d'un second formulaire formant document d'entrée dudit second type de formulaire dans ledit système, comprenant une troisième image desdits troisièmes champs contenant des troisièmes données d'entrée dudit premier type de données et une quatrième image desdits quatrièmes champs contenant des quatrièmes données d'entrée dudit second type de données ;
la lecture de ladite troisième image desdits troisièmes champs en utilisant ladite seconde définition de formulaire et la formation d'une seconde image de méta-formulaire dudit second document d'entrée en écrivant ladite troisième image dans lesdits cinquièmes champs en utilisant ladite définition de méta-formulaire ;
la lecture de ladite quatrième image dudit quatrième champ en utilisant ladite seconde définition de formulaire et la formation supplémentaire de ladite seconde image de méta-formulaire dudit second document d'entrée en écrivant ladite quatrième image dans lesdits sixièmes champs en utilisant ladite définition de méta-formulaire ;
le transfert de ladite seconde image de méta-formulaire dudit second document d'entrée vers lesdits moyens de traitement de reconnaissance de caractères ;
la reconnaissance des caractères desdites troisièmes données d'entrée dans lesdits cinquièmes champs de ladite seconde image de méta-formulaire en utilisant ladite définition de méta-formulaire et la reconnaissance des caractères desdites quatrièmes données d'entrée dans lesdits sixièmes champs de ladite seconde image de méta-formulaire en utilisant ladite définition de méta-formulaire dans lesdits moyens de reconnaissance de caractères ; et
la sortie desdites troisièmes et quatrièmes données d'entrée en provenance desdits moyens de reconnaissance de caractères.

3. Procédé selon la revendication 1, qui comprend de plus :
à la suite de ladite étape de réception d'une image d'un formulaire formant document d'entrée, l'étape de réalisation de reconnaissance de formulaires sur cette dernière pour déterminer qu'elle est dudit premier type de formulaire en ayant une première identification de formulaire ;
l'accès à ladite première définition de formulaire dans ledit système pour ledit premier type de formulaire, en utilisant ladite première identification de formulaire ;
l'accès à ladite définition de méta-formulaire dans ledit système pour ledit type de méta-formulaire, en utilisant ladite première identification de formulaire.

4. Procédé selon la revendication 3, qui comprend de plus :
ladite étape de formation d'une image de méta-formulaire dudit document d'entrée, comprenant de plus l'étape d'inclusion, la première information indiquant ladite première identification de formulaire.

5. Procédé selon la revendication 4, qui comprend de plus :
avant ladite étape de reconnaissance de caractères, l'étape d'accès à ladite définition de méta-formulaire dans ledit système pour ledit type de méta-formulaire, en utilisant ladite première information ;

6. Procédé selon la revendication 5, qui comprend de plus :
avant ladite étape de transfert de ladite image de méta-formulaire dudit document d'entrée vers lesdits moyens de traitement de reconnaissance de caractères, l'étape de compression de ladite image de méta-formulaire.

7. Procédé selon la revendication 6, qui comprend de plus :
avant ladite étape de reconnaissance de caractères, l'étape de décompression desdits cinquièmes champs de ladite image de méta-formulaire en utilisant ladite définition de méta-formulaire et desdits sixièmes champs de ladite image de méta-formulaire en utilisant ladite définition de méta-formulaire et en omettant la décompression d'autres parties de ladite image de méta-formulaire.

8. Procédé selon la revendication 1, qui comprend de plus :
ledit système comprenant des seconds moyens de traitement de reconnaissance de caractères ;
le transfert de ladite image de méta-formulaire dudit document d'entrée vers lesdits seconds moyens de traitement de reconnaissance de caractères ;
la reconnaissance des caractères desdites premières données d'entrée dans lesdits cinquièmes champs de ladite image de méta-formulaire en utilisant ladite définition de méta-formulaire et la reconnaissance des caractères desdites deuxièmes données d'entrée dans lesdits sixièmes champs de ladite image de méta-formulaire en utilisant ladite définition de méta-formulaire dans lesdits seconds moyens de reconnaissance de caractères ; et
la sortie desdites premières et deuxièmes données d'entrée en provenance desdits seconds moyens de reconnaissance de caractères.

9. Procédé selon la revendication 1, qui comprend de plus :
le basculement entre ladite première définition de formulaire et ladite seconde définition de formulaire tout en continuant à utiliser ladite définition de méta-formulaire dans ledit système ;
de sorte que le temps nécessaire pour ledit basculement est minimisé.

10. Procédé selon la revendication 1, qui comprend de plus :
la mise en correspondance desdits cinquièmes champs pour ledit premier type de données et desdits sixièmes champs pour ledit second type de données dans des positions sélectionnées pour maximiser les vitesses de reconnaissance de caractères pour des dispositifs de reconnaissance de caractères traitant des images de documents d'entrée, en utilisant ladite définition de méta-formulaire ;
de sorte que des emplacements de champs peuvent être mis en correspondance avec différentes positions sur le formulaire, quelle que soit la manière qui est la plus avantageuse pour des opérations ultérieures de reconnaissance de caractères.

11. Procédé selon la revendication 1, qui comprend de plus :
la formation d'une première définition de méta-formulaire dans ledit système en ayant une première pluralité de N différents types de données et la formation d'une seconde définition de méta-formulaire dans ledit système en ayant une seconde pluralité de M types de données, où M et N sont des quantités inférieures ou égales à P ;
ladite quantité P étant le nombre maximal de types différents de données qui peuvent être traités par un dispositif de reconnaissance de caractères en utilisant soit ladite première définition de méta-formulaire, soit ladite seconde définition de méta-formulaire ;
de sorte que le nombre de types de données est minimisé pour le même méta-formulaire, pour s'adapter à des dispositifs de reconnaissance de caractères susceptibles de gérer seulement un nombre limité de types différents à un instant donné.

12. Système de traitement de données, comprenant une entrée d'image de document et des moyens de traitement de reconnaissance de caractères (850), pour gérer la reconnaissance de caractères de texte dans une pluralité de types de formulaires formant documents ayant une pluralité de types de données communs, comprenant :
des premiers moyens de stockage (401, 402, 403) pour le stockage d'une première définition de formulaire dans ledit système pour un premier type de formulaire, en spécifiant une première pluralité de champs du type données comprenant un premier champ pour un premier type de données et un deuxième champ pour un second type de données ;
lesdits premiers moyens de stockage (401, 402, 403) stockant une seconde définition de formulaire dans ledit système pour un second type de formulaire, en spécifiant une seconde pluralité de champs du type données comprenant un troisième champ pour ledit premier type de données et un quatrième champ pour ledit second type de données ;
des seconds moyens de stockage (620) pour le stockage d'une définition de méta-formulaire dans ledit système pour un type de méta-formulaire, en spécifiant un cinquième champ pour ledit premier type de données et un sixième champ pour ledit second type de données ;
des moyens pour la réception d'une image d'un formulaire formant document d'entrée dudit premier type de formulaire dans ledit système, comprenant une première image dudit premier champ contenant des premières données d'entrée dudit premier type de données et une deuxième image dudit deuxième champ contenant des deuxièmes données d'entrée dudit second type de données ;
des moyens de lecture reliés auxdits premiers et seconds moyens de stockage, pour la lecture de ladite première image dudit premier champ en utilisant ladite première définition de formulaire et la formation d'une image de méta-formulaire dudit document d'entrée en écrivant ladite première image dans ledit cinquième champ en utilisant ladite définition de méta-formulaire ;
lesdits moyens de lecture servant à la lecture de ladite deuxième image dudit deuxième champ en utilisant ladite première définition de formulaire et la formation supplémentaire de ladite image de méta-formulaire dudit document d'entrée en écrivant ladite deuxième image dans ledit sixième champ en utilisant ladite définition de méta-formulaire ;
des moyens reliés auxdits moyens de lecture et auxdits moyens de reconnaissance de caractères, pour le transfert de ladite image de méta-formulaire dudit document d'entrée vers lesdits moyens de traitement de reconnaissance de caractères ;
lesdits moyens de traitement de reconnaissance de caractères servant à la reconnaissance des caractères desdites premières données d'entrée dans ledit cinquième champ de ladite image de méta-formulaire en utilisant ladite définition de méta-formulaire et à la reconnaissance des caractères desdites deuxièmes données d'entrée dans ledit sixième champ de ladite image de méta-formulaire en utilisant ladite définition de méta-formulaire ; et
lesdits moyens de reconnaissance de caractères servant à la sortie desdites premières et deuxièmes données d'entrée.
